# EUROPÄISCHE PATENTSCHRIFT

(11) **EP 3 895 521 B1**
(45) Veröffentlichungstag und Bekanntmachung des Hinweises auf die Patenterteilung: **15.03.2023**
(21) Anmeldenummer: 21162537.1
(22) Anmeldetag: 15.03.2021
(51) Int. Cl.: A01F 25/18, A01F 25/16

(54) **VERFAHREN ZUR STEUERUNG DER ERNTEGUTVERTEILUNG UND -VERDICHTUNG IN EINEM FLACHSILO**
METHOD FOR CONTROLLING THE DISTRIBUTION AND COMPACTION OF CROPS IN A FLAT SILO
PROCÉDÉ DE COMMANDE DE LA DISTRIBUTION ET DU COMPACTAGE DU PRODUIT DE RÉCOLTE DANS UN SILO PLAT

(30) Priorität: 17.04.2020 DE 102020204927; 14.05.2020 DE 102020206120
(43) Veröffentlichungstag der Anmeldung: 20.10.2021
(73) Patentinhaber: Deere & Company, Moline, IL 61265 (US)
(72) Erfinder: BROCKE, STEFAN, 68163 Mannheim (DE); FRITZ, Dr., NORBERT, 68549 Ilvesheim (DE)
(74) Vertreter: Dehnhardt, Florian Christopher

(56) Entgegenhaltungen:
- EP-A1- 3 403 487
- DE-A1-102007 053 610
- DE-A1-102017 208 558

## Beschreibung

Die Erfindung bezieht sich auf ein Verfahren zur Steuerung der Erntegutverteilung und -verdichtung in einem Flachsilo.

Im Rahmen der Nutztierhaltung ist in vielen landwirtschaftlichen Betrieben die Verfütterung von Silage üblich. Diese besteht aus fermentiertem Erntegut, wie beispielsweise abgemähtem Gras, gehäckselten Maispflanzen oder auch verschiedenen Getreidesorten. Zur Fermentation wird das zu silierende Erntegut in einem sogenannten Fahr- bzw. Flachsilo mittels eines Silofahrzeugs schichtweise verteilt, danach verdichtet und schließlich mittels einer Kunststoffplane gegenüber Luftzutritt von außen abgedeckt. Das Flachsilo befindet sich typischerweise in einer von Betonwänden umgrenzten Wanne. Es kann sich aber auch um ein Erdsilo handeln. Um optimale Fermentationsergebnisse zu erzielen, ist neben der für das betreffende Erntegut geeignet zu wählenden Siloform eine definierte Verteilung bzw. Verdichtung ausschlaggebend. Dies setzt entsprechende Fachkenntnis bzw. Erfahrung des Bedieners beim Führen des Silofahrzeugs voraus.

Zur Unterstützung des Bedieners ist in der DE 10 2017 208 558 A1 unter anderem ein Verfahren zur Verteilung von bereitgestelltem Erntegut mittels eines Verteilwerkzeugs während eines Verteilungsvorganges beschrieben. Das an einer landwirtschaftlichen Arbeitsmaschine beweglich gelagerte Verteilwerkzeug wird zumindest teilweise automatisch derart bewegungsgesteuert, dass dieses eine vorgegebene Arbeitshöhe relativ zu einer Referenz-Oberfläche einnimmt. Die Vorgabe der Arbeitshöhe erfolgt hierbei nach Maßgabe eines während eines Verteilungsvorgangs noch zu verteilenden Rest-Ernteguts und einer noch verbleibenden Rest-Strecke entlang einer Verteilungsstrecke für die Verteilung des Ernteguts. Hierdurch lässt sich eine effiziente und gleichmäßige Verteilung des Ernteguts erreichen.

Es ist Aufgabe der vorliegenden Erfindung, ein Verfahren der eingangs genannten Art hinsichtlich des beim Anlegen eines Flachsilos erzielbaren Fermentationsergebnisses weiter zu verbessern.

Diese Aufgabe wird durch ein Verfahren mit den Merkmalen des Patentanspruchs 1 gelöst.

Das erfindungsgemäße Verfahren zur Steuerung der Erntegutverteilung und -verdichtung in einem Flachsilo sieht vor, dass von einer Kontrolleinheit
- in Abhängigkeit von ersten Eingangsgrößen, die Materialeigenschaften des Ernteguts wiedergeben, eine zu erzielende Trockensubstanzdichte **D_{Mdry}** ermittelt wird,
- durch Auswertung von zweiten Eingangsgrößen, die Betriebseigenschaften und/oder -spezifikationen eines zur Verdichtung verwendeten Silofahrzeugs wiedergeben, ein maximal erzeugbarer Verdichtungsdruck **p_{d}** ermittelt wird,
- ausgehend von der ermittelten zu erzielenden Trockensubstanzdichte **D_{Mdry}** und dem ermittelten maximal erzeugbaren Verdichtungsdruck **p_{d}** eine maximal zulässige Schichtdicke **dₘₐₓ** für die Durchführung des Verteil- und Verdichtungsvorgangs ermittelt wird,
- eine während der Durchführung des Verteil- und Verdichtungsvorgangs aktuell aufgebrachte Schichtdicke **dₐₖₜ** ortsbezogen ermittelt wird,
- ein Vergleich zwischen der ermittelten maximal zulässigen Schichtdicke **dₘₐₓ** und der ortsbezogen ermittelten aktuell aufgebrachten Schichtdicke **dₐₖₜ** durchgeführt wird, um eine ortsbezogen optimierte Ziel-Schichtdicke **dₛₒₗₗ** des Ernteguts für die Durchführung des Verteil- und Verdichtungsvorgangs zu ermitteln, und
- eine Stelleinrichtung eines an dem Silofahrzeug vorgesehenen Verteilwerkzeugs im Sinne einer Angleichung der ortbezogen ermittelten aktuell aufgebrachten Schichtdicke **dₐₖₜ** an die ermittelte ortsbezogen optimierte Schichtdicke **dₛₒₗₗ** angesteuert wird.

Zur Durchführung des Verteil- und Verdichtungsvorgangs hat der Bediener ausschließlich die Fahrt des Silofahrzeugs durch Lenken sowie Beschleunigen bzw. Bremsen zu steuern, die Stellung des Verteilwerkzeugs hingegen wird abhängig von der jeweiligen Position des Silofahrzeugs automatisiert angepasst. Dies stellt eine wesentliche Arbeitserleichterung gegenüber der ansonsten üblichen manuellen Verteilung bzw. Verdichtung des Ernteguts in einem Flachsilo dar, bei der vergleichsweise hohe Anforderungen an die Fachkenntnis bzw. Erfahrung des Bedieners gestellt werden.

Das erfindungsgemäße Verfahren beruht dabei letztlich auf einem ortsprädiktiven bzw. selbstoptimierenden Ansatz, bei dem ausgehend von der aktuell aufgebrachten Schichtdicke **dₐₖₜ** jeweils für einen darauffolgenden (infinitesimal großen) Siloabschnitt vorausschauend eine hinsichtlich ihrer Verdichtungsfähigkeit optimierte Schichtdicke **dₛₒₗₗ** ermittelt wird, die dann die Grundlage zur Ansteuerung der Stelleinrichtung des Verteilwerkzeugs darstellt.

Im Ergebnis wird ein in Bezug auf das betreffende Erntegut optimiertes Fermentationsergebnis sichergestellt.

Weitere vorteilhafte Ausgestaltungen des erfindungsgemäßen Verfahrens gehen aus den Unteransprüchen hervor.

Vorzugsweise ist das Verteilwerkzeug als frontseitig am Silofahrzeug angeordnetes Verteilschild ausgebildet, wobei das Verteilschild mittels der Stelleinrichtung hinsichtlich eines Abstands **d** und/oder einer Vertikallage **α** gegenüber der durch eine äußere Erntegutschicht gebildeten Silooberfläche verändert wird. Bei der Stelleinrichtung kann es sich insbesondere um einen hydraulischen Dreipunkt-Kraftheber handeln, der sich im Frontbereich des als landwirtschaftlicher Traktor ausgebildeten Silofahrzeugs befindet. Das Verteilschild ist über zugehörige Kupplungselemente abnehmbar an dem Dreipunkt-Kraftheber angebracht. Zur Veränderung der Vertikallage **α** gegenüber der Silooberfläche lässt sich das Verteilschild mittels eines von dem Dreipunkt-Kraftheber umfassten hydraulischen Oberlenkers verkippen. Ein hydraulisches Hubwerk ermöglicht ein Anheben und Absenken des Verteilschilds und damit eine Veränderung des Abstands **d** gegenüber der Silooberfläche. Sowohl das hydraulische Hubwerk wie auch der hydraulische Oberlenker lassen sich hierzu auf Veranlassung der Kontrolleinheit über zugehörige elektrische Steuerventile, die mit einem Hydrauliksystem des landwirtschaftlichen Traktors in Verbindung stehen, betätigen.

Zur Optimierung der ortsbezogen ermittelten Ziel-Schichtdicke **dₛₒₗₗ** kann von der Kontrolleinheit eine als Nebenbedingung bei der Durchführung des Verteil- und Verdichtungsvorgangs einzuhaltende Arbeitseffizienzvorgabe einbezogen werden. Die Wahl einer erhöhten Arbeitseffizienz durch entsprechende Vergrößerung der Ziel-Schichtdicke **dₛₒₗₗ** geht in diesem Fall zulasten der Verdichtungsqualität, und umgekehrt. Insofern ist bedienerseitig ein entsprechender Kompromiss zu finden.

In einem solchen Fall ist es denkbar, dass die einzuhaltende Arbeitseffizienzvorgabe über eine mit der Kontrolleinheit in Verbindung stehende Nutzerschnittstelle entsprechend festgelegter Kategorien auswählbar ist. Hierbei sind für den Bediener leicht einschätzbare Kategorien wie "hoch", "mittel" und "niedrig" denkbar.

Bei der Nutzerschnittstelle handelt es sich beispielsweise um ein in einer Fahrerkabine des Silofahrzeugs anbringbares mobiles Endgerät universeller Bauart (Tablet-Computer, Smartphone, etc.), das einen Touchscreen aufweist und über eine Bluetooth- oder WLAN-Schnittstelle drahtlos mit der Kontrolleinheit in Verbindung steht. Der Touchscreen bildet zugleich eine Bedien- und Anzeigeeinheit der Nutzerschnittstelle. Alternativ kann die Nutzerschnittstelle auch als sogenanntes Graphical User Interface (GUI) herstellerseitig in der Fahrerkabine fest verbaut sein.

Ferner besteht die Möglichkeit, dass zur Optimierung der ortsbezogen ermittelten Ziel-Schichtdicke **dₛₒₗₗ** von der Kontrolleinheit Daten hinsichtlich einer vor Durchführung des Verteil- und Verdichtungsvorgangs erfassten Silokontur und einer beim Auftragen der nächsten Erntegutschicht zu erreichenden Silokontur einbezogen werden. Die zu erreichende (d.h. bezüglich des Fermentationsvorgangs optimale) Silokontur ist hierbei unter anderem abhängig von der Art des zu silierenden Ernteguts, insbesondere des Pflanzentyps, und kann beispielsweise vom Bediener über die mit der Kontrolleinheit in Verbindung stehende Nutzerschnittstelle vorgegeben werden. Insbesondere können dem Bediener neben der Möglichkeit der Eingabe einer gewünschten Lage bzw. von Außenabmessungen des Flachsilos für den betreffenden Pflanzentyp geeignete Siloformen zur Auswahl angeboten werden. Letztere können sich unter anderem hinsichtlich ihres seitlichen Gefälles, der Verhältnisse der Außenabmessungen, sowie ihrer Wölbung unterscheiden. Die Erfassung der Silokontur erfolgt dabei auf Grundlage einer kontinuierlichen Aufzeichnung einer aus GPS-Daten ermittelten räumlichen Position des Silofahrzeugs während des vorhergehend durchgeführten Verteil- und Verdichtungsvorgangs. Durch Vergleich der vor Durchführung des Verteil- und Verdichtungsvorgangs erfassten Silokontur und der beim Auftragen der nächsten Erntegutschicht zu erreichenden Silokontur lassen sich insbesondere Fehlstellen identifizieren und gezielt mit Erntegut auffüllen. Auch kann die Ziel-Schichtdicke **dₛₒₗₗ** ortsbezogen variiert werden, um eine beabsichtigt inhomogene Verteilung des Ernteguts entlang der Wölbung des Flachsilos zu verwirklichen.

Bei der Ansteuerung der Stelleinrichtung des Verteilwerkzeugs ist es vorstellbar, dass Informationen hinsichtlich einer zu verteilenden Gesamtmenge von in das Flachsilo entladenen Ernteguts und/oder einer zu verteilenden Restmenge an Erntegut einbezogen werden. Wird das Erntegut mittels eines Ladewagens mit Einzugsvorrichtung zum Flachsilo transportiert, so kann die zu verteilende Gesamtmenge insbesondere aus dem Fördervolumen und der Massedichte des über die Einzugsvorrichtung in einen Laderaum des Ladewagens verbrachten Ernteguts abgeleitet werden. Unter der Voraussetzung, dass der Ladewagen vollständig ins Flachsilo entleert wird, lässt sich so eine präzise Aussage hinsichtlich der nachfolgend zu verteilenden Gesamtmenge treffen. Bezüglich der Ermittlung der zu verteilenden Restmenge an Erntegut kann die Kontrolleinheit eine auf das Verteilwerkzeug ausgeübte Krafteinwirkung auswerten. In letzterem Fall werden geometrische Eigenschaften des Verteilwerkszeugs, wie zum Beispiel die Breite eines zugehörigen Verteilschilds und dessen Form, berücksichtigt. Der Umfang der auf das Verteilwerkzeug ausgeübten Krafteinwirkung lässt sich anhand der im hydraulischen Oberlenker des Dreipunkt-Krafthebers verursachten Druckverhältnisse unter Einbeziehung der such aus dessen Ausfahrposition abgeleiteten Vertikallage **α** abschätzen.

Insbesondere kann die von dem Ladewagen in das Flachsilo entladene Erntegutmenge seitens eines Farmmanagementsystems erfasst und drahtlos an die Kontrolleinheit übermittelt werden. Dies erfolgt beispielsweise über eine mit der Kontrolleinheit in Verbindung stehende Mobilfunkschnittstelle.

Bevorzugt betreffen die ersten Eingangsgrößen einen Restfeuchtegehalt des Ernteguts, einen Pflanzentyp und/oder einen Verarbeitungsgrad. Die betreffenden Größen sind maßgeblich für die zu erzielende Trockensubstanzdichte **D_{Mdry}** und können vom Bediener des Silofahrzeugs vor Beginn der Siloarbeiten über die mit der Kontrolleinheit in Verbindung stehende Nutzerschnittstelle eingegeben werden. Der Verarbeitungsgrad berücksichtigt hierbei den Umstand, ob die vollständige Pflanze oder lediglich bestimmte Pflanzenbestandteile siliert werden sollen, und zu welchem Grad solche Pflanzenbestandteile gegebenenfalls zerkleinert sind. Der Restfeuchtegehalt des Ernteguts kann vom Bediener vor Beginn des Verteil- und Verdichtungsvorgangs mittels eines herkömmlichen Feuchtigkeitsmessgeräts ermittelt werden.

Des Weiteren können die zweiten Eingangsgrößen ein Fahrzeuggewicht, eine durch Bodeneingriffsmittel des Silofahrzeugs gebildete Aufstandsfläche, einen Reifendruck, einen Reifentyp, und/oder Verdichtungseigenschaften eines an dem Silofahrzeug vorgesehenen Verdichtungswerkzeugs betreffen. Das Fahrzeuggewicht einschließlich möglicher Ballastierungsgewichte kann vom Bediener ebenfalls vor Beginn der Siloarbeiten über die mit der Kontrolleinheit in Verbindung stehende Nutzerschnittstelle eingegeben werden. Ferner lassen sich diesbezügliche Informationen eines Ballastierungsassistenten, wie er in der DE 10 2017 205 827 A1 beschrieben ist, nutzen. Durch Verknüpfung mit der bekannten Aufstandsfläche der Bodeneingriffsmittel, bei denen es sich entweder um Räder und/oder Kettenlaufwerke handelt, ergibt sich dann die zugehörige Aufstandskraft des Silofahrzeugs. Handelt es sich bei den Bodeneingriffsmitteln um Räder mit zugehörigen Reifen, wird die Aufstandskraft zudem durch den Reifendruck wie auch durch den Reifentyp, genauer gesagt durch Spezifikationen hinsichtlich Verformbarkeit und Profilierung, beeinflusst. Zusätzlich kann zur Verdichtung des Ernteguts neben den Bodeneingriffsmitteln ein spezielles Verdichtungswerkzeug vorhanden sein. Dieses ist typischerweise durch eine Silowalze gebildet, die heckseitig an dem Silofahrzeug angebracht ist. Die Verdichtungseigenschaften der Silowalze sind herstellerseitig spezifiziert, sodass sich ein Einfluss auf den zu ermittelnden maximal erzeugbaren Verdichtungsdruck **p_{d}** ohne Weiteres abschätzen lässt.

Die Vorgehensweise bei der Ermittlung der aktuell aufgebrachten Schichtdicke **dₐₖₜ** hängt hierbei von der Art des zu silierenden Ernteguts ab.

Soll stängelartiges Erntegut, wie beispielsweise Gras oder dergleichen, siliert werden, so kann die aktuell aufgebrachte Schichtdicke **dₐₖₜ** von der Kontrolleinheit auf Grundlage eines Vergleichs zwischen einer vor Durchführung des Verteil- und Verdichtungsvorgangs erfassten ersten Silokontur sowie einer sich bei Durchführung des Verteil- und Verdichtungsvorgangs ergebenden zweiten Silokontur ermittelt werden. Die aktuell aufgebrachte Schichtdicke **dₐₖₜ** ergibt sich dann unmittelbar aufgrund des lokalen Abstands der beiden Silokonturen zueinander. Die erste bzw. zweite Silokontur kann dabei jeweils durch kontinuierliche Aufzeichnung einer aus GPS-Daten ermittelten (räumlichen) Position des Silofahrzeugs beim Anlegen des Flachsilos erfasst werden.

Handelt es sich bei dem Erntegut um schüttfähiges Material in Form von Getreide oder dergleichen, so kann die aktuell aufgebrachte Schichtdicke **dₐₖₜ** von der Kontrolleinheit auf Grundlage eines Vergleichs zwischen einer vor Durchführung des Verteil- und Verdichtungsvorgangs erfassten Silokontur sowie einer dieser gegenüber erfassten Positionierung des Verteilwerkzeugs ermittelt werden. Für den Fall des als Verteilschild ausgebildeten Verteilwerkzeugs ergibt sich die aktuell aufgebrachte Schichtdicke **dₐₖₜ** dann unmittelbar aus dem lokalen Abstand **d** der Schildunterkante gegenüber der erfassten Silokontur. Die Erfassung der Silokontur kann auch hier durch kontinuierliche Aufzeichnung der aus GPS-Daten ermittelten (räumlichen) Position des Silofahrzeugs beim Anlegen des Flachsilos erfolgen.

Zur umfassenden Information des Bedieners über den Status der Siloarbeiten bzw. über den entsprechenden Verdichtungsstatus des Flachsilos besteht die Möglichkeit, dass die ortsbezogen ermittelte aktuell aufgebrachte Schichtdicke **dₐₖₜ**, die ermittelte maximal zulässige Schichtdicke **dₘₐₓ**, und/oder die ermittelte ortsbezogen optimierte Schichtdicke **dₛₒₗₗ** über eine mit der Kontrolleinheit in Verbindung stehende Anzeigeeinheit visualisiert wird. Zumindest die aktuell aufgebrachte Schichtdicke **dₐₖₜ** wie auch die optimierte Schichtdicke **dₛₒₗₗ** sind vom jeweiligen Ort auf dem Flachsilo abhängig, sodass sich deren Visualisierung in Form einer kartografischen Siloansicht anbietet. Die Anzeigeeinheit kann dabei Bestandteil der bereits erwähnten Nutzerschnittstelle sein.

Das erfindungsgemäße Verfahren zur Steuerung der Erntegutverteilung und -verdichtung in einem Flachsilo wird im Folgenden anhand der beigefügten Zeichnungen eingehend erläutert. Es zeigen:
- Fig. 1: eine schematische Ansicht einer Arbeitsumgebung, in der das erfindungsgemäße Verfahren ausgeführt wird,
- Fig. 2: eine separate Darstellung von Hardwarekomponenten zur Ausführung des erfindungsgemäßen Verfahrens, und
- Fig. 3: ein als Flussdiagramm dargestelltes Ausführungsbeispiel des erfindungsgemäßen Verfahrens.

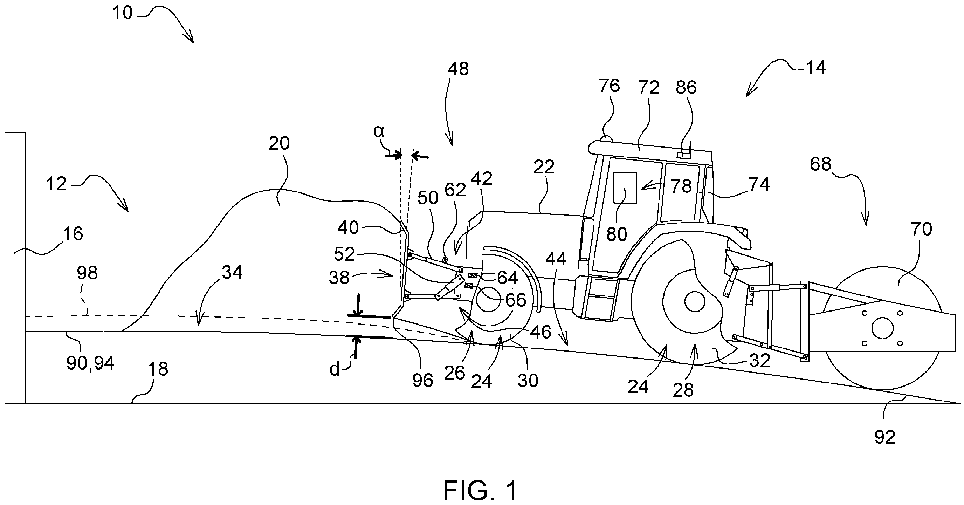

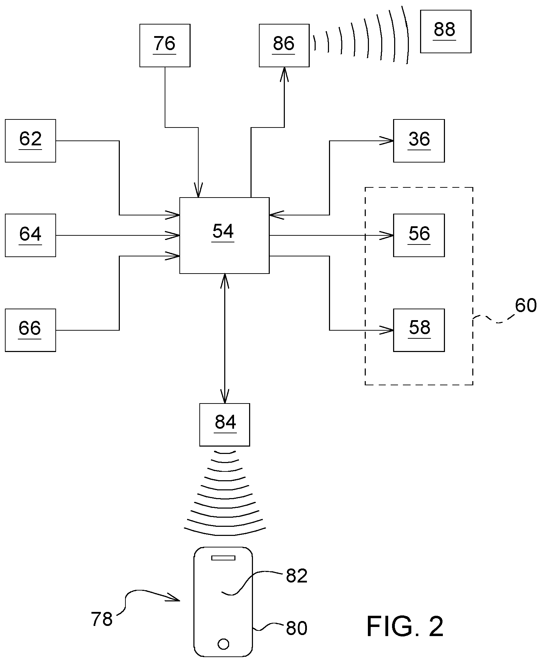

Fig. 1 zeigt eine schematische Ansicht einer Arbeitsumgebung 10, in der das erfindungsgemäße Verfahren ausgeführt wird, wobei einige Hardwarekomponenten aus Gründen der Übersichtlichkeit separat in Fig. 2 wiedergegeben sind.

In Fig. 1 dargestellt ist ein Flachsilo 12 und ein zum Anlegen des Flachsilos 12 vorgesehenes Silofahrzeug 14.

Das Flachsilo 12 befindet sich in einer von Betonwänden 16 umgrenzten Wanne 18. Zur Fermentation wird das zu silierende Erntegut 20, wie beispielsweise abgemähtes Gras, gehäckselte Maispflanzen oder auch verschiedene Getreidesorten, in dem Flachsilo 12 mittels des Silofahrzeugs 14 schichtweise verteilt, danach verdichtet und schließlich mittels einer nicht gezeigten Kunststoffplane gegenüber Luftzutritt von außen abgedeckt.

Bei dem zur Durchführung des Verteil- und Verdichtungsvorgangs vorgesehenen Silofahrzeug 14 handelt es sich um einen landwirtschaftlichen Traktor 22, der sich über Bodeneingriffsmittel 24, die vorliegend als Vorder- bzw. Hinterräder 26, 28 mit zugehörigen Reifen 30, 32 ausgebildet sind, gegenüber dem Untergrund 34 abstützt. Die Reifen 30, 32 lassen sich seitens einer zentralen Reifenfüllanlage 36 mit einem gewünschten Reifendruck beaufschlagen.

Der landwirtschaftliche Traktor 22 trägt ein Verteilwerkzeug 38, das als frontseitig angeordnetes Verteilschild 40 ausgebildet ist. Das Verteilschild 40 ist mittels einer Stelleinrichtung 42 hinsichtlich eines Abstands d und/oder einer Vertikallage **α** gegenüber der durch eine äußere Erntegutschicht (des vorhergehend durchgeführten Verteil- und Verdichtungsvorgangs) gebildeten Silooberfläche 44 veränderbar. Bei der Stelleinrichtung 42 handelt es sich um einen hydraulischen Dreipunkt-Kraftheber 46, der sich im Frontbereich 48 des landwirtschaftlichen Traktors 22 befindet. Das Verteilschild 40 ist über zugehörige Kupplungselemente abnehmbar an dem Dreipunkt-Kraftheber 46 angebracht.

Zur Veränderung der Vertikallage **α** gegenüber der Silooberfläche 44 lässt sich das Verteilschild 40 mittels eines von dem Dreipunkt-Kraftheber 46 umfassten hydraulischen Oberlenkers 50 verkippen. Ein hydraulisches Hubwerk 52 ermöglicht ein Anheben und Absenken des Verteilschilds 40 und damit eine Veränderung des Abstands **d** gegenüber der Silooberfläche 44. Sowohl das hydraulische Hubwerk 52 wie auch der hydraulische Oberlenker 50 lassen sich hierzu auf Veranlassung einer mikroprozessorgesteuerten Kontrolleinheit 54 über zugehörige elektrische Steuerventile 56, 58, die mit einem Hydrauliksystem 60 des landwirtschaftlichen Traktors 22 in Verbindung stehen, betätigen. Die in dem hydraulischen Oberlenker 50 herrschenden Druckverhältnisse werden mittels eines Drucksensors 62 erfasst und gemeinsam mit einer von einem ersten Stellwegsensor 64 erfassten Ausfahrposition des hydraulischen Oberlenkers 50 an die Kontrolleinheit 54 übermittelt. Ein zweiter Stellwegsensor 66 dient der Erfassung der Positionierung des hydraulischen Hubwerks 52 und damit des Verteilwerkzeugs 38 gegenüber der Silooberfläche 44.

Zur Verdichtung des Ernteguts 20 ist neben den Bodeneingriffsmitteln 24 ein spezielles Verdichtungswerkzeug 68 vorhanden. Dieses ist in Fig. 1 durch eine Silowalze 70 gebildet. Die Silowalze 70 ist heckseitig an dem landwirtschaftlichen Traktor 22 angebracht.

Ein im Dachbereich 72 einer Fahrerkabine 74 angebrachter GPS-Empfänger 76 dient der Bestimmung der räumlichen Position des landwirtschaftlichen Traktors 22 gegenüber dem Flachsilo 12. Die mittels des GPS-Empfängers 76 bestimmte Position wird zusätzlich durch Nutzung eines RTK-Verfahrens (RTK - Real Time Kinematic) korrigiert, sodass eine Genauigkeit im Bereich von ± 1 cm erzielt wird. Die solchermaßen korrigierten GPS-Daten werden anschließend der Kontrolleinheit 54 zugeführt.

Des Weiteren ist eine Nutzerschnittstelle 78 vorgesehen, bei der es sich beispielhaft um ein in der Fahrerkabine 74 des landwirtschaftlichen Traktors 22 anbringbares mobiles Endgerät 80 universeller Bauart (Tablet-Computer, Smartphone, etc.) handelt, das einen Touchscreen 82 aufweist und über eine Bluetooth- oder WLAN-Schnittstelle 84 drahtlos mit der Kontrolleinheit 54 in Verbindung steht. Der Touchscreen 82 bildet zugleich eine Bedien- und Anzeigeeinheit der Nutzerschnittstelle 78. Alternativ ist die Nutzerschnittstelle 78 als sogenanntes Graphical User Interface (GUI) herstellerseitig in der Fahrerkabine 74 fest verbaut.

Eine mit der Kontrolleinheit 54 in Verbindung stehende Mobilfunkschnittstelle 86 ermöglicht einen drahtlosen Datenaustausch mit einem Farmmanagementsystem 88. Ein derartiges Farmmanagementsystem 88 ist beispielsweise als "John Deere Operations Center" bekannt, das insbesondere über das mobile Endgerät 80 einen Zugriff auf MyJohnDeere.com zum Zwecke der zentralen Arbeitsplanung und -überwachung ermöglicht.

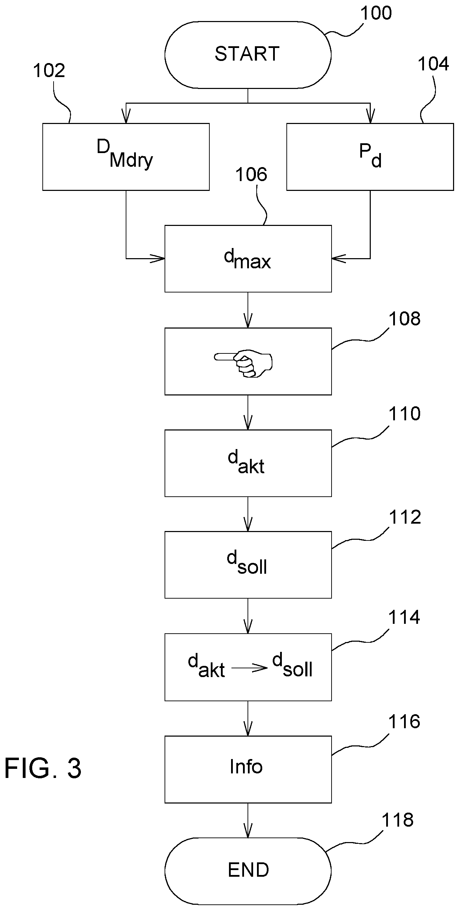

Fig. 3 zeigt ein als Flussdiagramm dargestelltes Ausführungsbeispiel des erfindungsgemäßen Verfahrens, das unter Bezugnahme auf die in Fig. 1 dargestellte Arbeitsumgebung 10 erläutert werden soll.

Das als entsprechende Software von der Kontrolleinheit 54 ausgeführte Verfahren wird in einem Startschritt 100 initiiert.

In einem ersten Schritt 102 wird von der Kontrolleinheit 54 in Abhängigkeit von ersten Eingangsgrößen, die Materialeigenschaften des Ernteguts 20 wiedergeben, eine zu erzielende Trockensubstanzdichte **D_{Mdry}** ermittelt. Die ersten Eingangsgrößen betreffen einen Restfeuchtegehalt des Ernteguts 20, einen Pflanzentyp und/oder einen Verarbeitungsgrad. Die betreffenden Größen sind maßgeblich für die zu erzielende Trockensubstanzdichte **D_{Mdry}** und werden vom Bediener des landwirtschaftlichen Traktors 22 vor Beginn der Siloarbeiten über den Touchscreen 82 eingegeben. Der Verarbeitungsgrad berücksichtigt hierbei den Umstand, ob die vollständige Pflanze oder lediglich bestimmte Pflanzenbestandteile siliert werden sollen, und zu welchem Grad solche Pflanzenbestandteile gegebenenfalls zerkleinert sind. Der Restfeuchtegehalt des Ernteguts 20 wird vom Bediener vor Beginn des Verteil- und Verdichtungsvorgangs mittels eines herkömmlichen Feuchtigkeitsmessgeräts ermittelt.

Des Weiteren wird von der Kontrolleinheit 54 in einem zweiten Schritt 104 durch Auswertung von zweiten Eingangsgrößen, die Betriebseigenschaften und/oder -spezifikationen des zur Verdichtung verwendeten landwirtschaftlichen Traktors 22 wiedergeben, ein maximal erzeugbarer Verdichtungsdruck **p_{d}** ermittelt. Die zweiten Eingangsgrößen betreffen ein Fahrzeuggewicht, eine durch die Bodeneingriffsmittel 24 des landwirtschaftlichen Traktors 22 gebildete Aufstandsfläche, einen Reifendruck, einen Reifentyp, und/oder Verdichtungseigenschaften der an dem landwirtschaftlichen Traktor 22 vorgesehenen Silowalze 70. Das Fahrzeuggewicht einschließlich möglicher Ballastierungsgewichte wird vom Bediener ebenfalls vor Beginn der Siloarbeiten über den Touchscreen 82 eingegeben. Ferner lassen sich diesbezügliche Informationen eines Ballastierungsassistenten, wie er in der DE 10 2017 205 827 A1 beschrieben ist, nutzen. Durch Verknüpfung mit der bekannten Aufstandsfläche der Reifen 30, 32 ergibt sich dann die zugehörige Aufstandskraft des landwirtschaftlichen Traktors 22. Die Aufstandskraft wird durch den Reifendruck wie auch durch den Reifentyp, genauer gesagt durch Spezifikationen hinsichtlich Verformbarkeit und Profilierung, beeinflusst. Die Verdichtungseigenschaften der Silowalze 70 sind herstellerseitig spezifiziert, sodass sich ein Einfluss auf den zu ermittelnden maximal erzeugbaren Verdichtungsdruck **p_{d}** ohne Weiteres abschätzen lässt. Die entsprechenden Spezifikationen zu Reifentyp und Silowalze 70 lassen sich hierbei vom Bediener über den Touchscreen 82 menügesteuert auswählen. Der jeweilige Reifendruck wird seitens der zentralen Reifenfüllanlage 36 bestimmt und an die Kontrolleinheit 54 übermittelt.

In einem nachfolgenden dritten Schritt 106 wird von der Kontrolleinheit 54 ausgehend von der im ersten Schritt 102 ermittelten zu erzielenden Trockensubstanzdichte **D_{Mdry}** und dem im zweiten Schritt 104 ermittelten maximal erzeugbaren Verdichtungsdruck **p_{d}** eine maximal zulässige Schichtdicke **dₘₐₓ** für die Durchführung des Verteil- und Verdichtungsvorgangs ermittelt.

Anschließend wird der Bediener in einem vierten Schritt 108 über den Touchscreen 82 aufgefordert, den Verteilungs- und Verdichtungsvorgang zu starten. Sobald dies geschehen ist, wird von der Kontrolleinheit 54 in einem fünften Schritt 110 eine während der Durchführung des Verteil- und Verdichtungsvorgangs aktuell aufgebrachte Schichtdicke **dₐₖₜ** ortsbezogen ermittelt.

Die Vorgehensweise bei der Ermittlung der aktuell aufgebrachten Schichtdicke **dₐₖₜ** hängt hierbei von der Art des zu silierenden Ernteguts 20 ab.

Soll stängelartiges Erntegut 20, wie beispielsweise Gras oder dergleichen, siliert werden, so wird die aktuell aufgebrachte Schichtdicke **dₐₖₜ** von der Kontrolleinheit 54 auf Grundlage eines Vergleichs zwischen einer vor Durchführung des Verteil- und Verdichtungsvorgangs erfassten ersten Silokontur 90 sowie einer sich bei Durchführung des Verteil- und Verdichtungsvorgangs ergebenden zweiten Silokontur 92 ermittelt. Die aktuell aufgebrachte Schichtdicke **dₐₖₜ** ergibt sich dann unmittelbar aufgrund des lokalen Abstands der beiden Silokonturen 90, 92 zueinander. Die erste bzw. zweite Silokontur 90, 92 wird dabei jeweils durch kontinuierliche Aufzeichnung der aus den korrigierten GPS-Daten ermittelten (räumlichen) Position des landwirtschaftlichen Traktors 22 beim Anlegen des Flachsilos 12 erfasst.

Handelt es sich bei dem Erntegut 20 um schüttfähiges Material in Form von Getreide oder dergleichen, so wird die aktuell aufgebrachte Schichtdicke **dₐₖₜ** von der Kontrolleinheit 54 auf Grundlage eines Vergleichs zwischen einer vor Durchführung des Verteil- und Verdichtungsvorgangs erfassten Silokontur 94 sowie einer dieser gegenüber mittels des zweiten Stellwegsensors 66 erfassten Positionierung des Verteilwerkzeugs 38 ermittelt. Für den Fall des als Verteilschild 40 ausgebildeten Verteilwerkzeugs 38 ergibt sich die aktuell aufgebrachte Schichtdicke **dₐₖₜ** dann unmittelbar aus dem lokalen Abstand **d** der Schildunterkante 96 gegenüber der erfassten Silokontur 94. Die Erfassung der Silokontur 94 erfolgt auch hier durch kontinuierliche Aufzeichnung der aus den korrigierten GPS-Daten ermittelten (räumlichen) Position des landwirtschaftlichen Traktors 22 beim Anlegen des Flachsilos 12.

Auf den fünften Schritt 110 folgt ein sechster Schritt 112, in dem von der Kontrolleinheit 54 ein Vergleich zwischen der ermittelten maximal zulässigen Schichtdicke **dₘₐₓ** und der ortsbezogen ermittelten aktuell aufgebrachten Schichtdicke **dₐₖₜ** durchgeführt wird, um eine ortsbezogen optimierte Ziel-Schichtdicke **dₛₒₗₗ** des Ernteguts 20 für die Durchführung des Verteil- und Verdichtungsvorgangs zu ermitteln.

Ferner bezieht die Kontrolleinheit 54 im sechsten Schritt 112 zur Optimierung der ortsbezogen ermittelten Ziel-Schichtdicke **dₛₒₗₗ** Daten hinsichtlich der vor Durchführung des Verteil- und Verdichtungsvorgangs erfassten Silokontur 90 bzw. 94 und einer beim Auftragen der nächsten Erntegutschicht zu erreichenden Silokontur 98 ein. Die zu erreichende (d.h. bezüglich des Fermentationsvorgangs optimale) Silokontur 98 ist hierbei unter anderem abhängig von der Art des zu silierenden Ernteguts 20, insbesondere des Pflanzentyps, und wird vom Bediener über den Touchscreen 82 vorgegeben. Hierzu werden dem Bediener neben der Möglichkeit der Eingabe einer gewünschten Lage bzw. von Außenabmessungen des Flachsilos 12 für den betreffenden Pflanzentyp geeignete Siloformen zur Auswahl angeboten. Letztere unterscheiden sich unter anderem hinsichtlich ihres seitlichen Gefälles, der Verhältnisse der Außenabmessungen, sowie ihrer Wölbung. Durch Vergleich der vor Durchführung des Verteil- und Verdichtungsvorgangs erfassten Silokontur 90 bzw. 94 und einer beim Auftragen der nächsten Erntegutschicht zu erreichenden Silokontur 98 lassen sich insbesondere Fehlstellen identifizieren und gezielt mit Erntegut 20 auffüllen. Optional wird die Ziel-Schichtdicke **dₛₒₗₗ** ortsbezogen variiert, um eine beabsichtigt inhomogene Verteilung des Ernteguts 20 entlang der Wölbung des Flachsilos 12 zu verwirklichen.

In einem siebten Schritt 114 wird von der Kontrolleinheit 54 die Stelleinrichtung 42 des an dem landwirtschaftlichen Traktor 22 vorgesehenen Verteilwerkzeugs 38 im Sinne einer Angleichung der ortbezogen ermittelten aktuell aufgebrachten Schichtdicke **dₐₖₜ** an die ermittelte ortsbezogen optimierte Schichtdicke **dₛₒₗₗ** angesteuert.

Zur umfassenden Information des Bedieners über den Status der Siloarbeiten bzw. über den entsprechenden Verdichtungsstatus des Flachsilos 12 wird in einem achten Schritt 116 die ortsbezogen ermittelte aktuell aufgebrachte Schichtdicke **dₐₖₜ**, die ermittelte maximal zulässige Schichtdicke **dₘₐₓ**, und/oder die ermittelte ortsbezogen optimierte Schichtdicke **dₛₒₗₗ** über den Touchscreen 82 visualisiert. Zumindest die aktuell aufgebrachte Schichtdicke **dₐₖₜ** wie auch die optimierte Schichtdicke **dₛₒₗₗ** sind vom jeweiligen Ort auf dem Flachsilo 12 abhängig, sodass deren Visualisierung in Form einer kartografischen Siloansicht erfolgt.

Anschließend wird das erfindungsgemäße Verfahren in einem Schlussschritt 118 beendet.

Im Ergebnis hat der Bediener zur Durchführung des Verteil- und Verdichtungsvorgangs ausschließlich die Fahrt des landwirtschaftlichen Traktors 22 durch Lenken sowie Beschleunigen bzw. Bremsen zu steuern, die Stellung des Verteilwerkzeugs 38 hingegen wird abhängig von der jeweiligen Position des landwirtschaftlichen Traktors 22 automatisiert angepasst.

Das erfindungsgemäße Verfahren kann verschiedene Weiterbildungen aufweisen, die entsprechend jeweiliger Ausbaustufen optional vorgesehen sind.

Gemäß einer ersten Option wird von der Kontrolleinheit 54 im sechsten Schritt 112 zur Optimierung der ortsbezogen ermittelten Ziel-Schichtdicke **dₛₒₗₗ** eine als Nebenbedingung bei der Durchführung des Verteil- und Verdichtungsvorgangs einzuhaltende Arbeitseffizienzvorgabe einbezogen. Die Wahl einer erhöhten Arbeitseffizienz durch entsprechende Vergrößerung der Ziel-Schichtdicke **dₛₒₗₗ** geht in diesem Fall zulasten der Verdichtungsqualität, und umgekehrt. Insofern ist bedienerseitig ein entsprechender Kompromiss zu finden.

Die einzuhaltende Arbeitseffizienzvorgabe ist über den Touchscreen 82 entsprechend festgelegter Kategorien vorgebbar. Hierbei sind für den Bediener leicht einschätzbare Kategorien wie "hoch", "mittel" und "niedrig" vorgesehen.

Zudem kann als zweite Option vorgesehen sein, dass bei der Ansteuerung der Stelleinrichtung 42 des Verteilwerkzeugs 38 im siebten Schritt 114 Informationen hinsichtlich einer zu verteilenden Gesamtmenge von in das Flachsilo 12 entladenen Ernteguts 20 und/oder einer zu verteilenden Restmenge an Erntegut 20 einbezogen werden. Wird das Erntegut 20 mittels eines Ladewagens mit Einzugsvorrichtung zum Flachsilo 12 transportiert, so wird die zu verteilende Gesamtmenge aus dem Fördervolumen und der Massedichte des über die Einzugsvorrichtung in einen Laderaum des Ladewagens verbrachten Ernteguts 20 abgeleitet. Unter der Voraussetzung, dass der Ladewagen vollständig ins Flachsilo 12 entleert wird, lässt sich so eine präzise Aussage hinsichtlich der nachfolgend zu verteilenden Gesamtmenge treffen. Die von dem Ladewagen in das Flachsilo 12 entladene Erntegutmenge wird seitens des Farmmanagementsystems 88 erfasst und drahtlos an die Kontrolleinheit 54 übermittelt. Dies erfolgt über die mit der Kontrolleinheit 54 in Verbindung stehende Mobilfunkschnittstelle 86.

Bezüglich der Ermittlung der zu verteilenden Restmenge an Erntegut 20 wertet die Kontrolleinheit 54 eine auf das Verteilwerkzeug 38 ausgeübte Krafteinwirkung aus. In letzterem Fall werden geometrische Eigenschaften des Verteilwerkzeugs 38, hier die Breite des zugehörigen Verteilschilds 40 und dessen Form, berücksichtigt. Der Umfang der auf das Verteilwerkzeug 38 ausgeübten Krafteinwirkung wird dabei von der Kontrolleinheit 54 anhand der im hydraulischen Oberlenker 50 des Dreipunkt-Krafthebers 46 verursachten sowie mittels des Drucksensors 62 erfassten Druckverhältnisse unter Einbeziehung der mittels des ersten Stellwegsensors 62 aus der erfassten Ausfahrposition des hydraulischen Oberlenkers 50 abgeleiteten Vertikallage **α** abschätzt.

## Patentansprüche

1. Verfahren zur Steuerung der Erntegutverteilung und -verdichtung in einem Flachsilo, bei dem von einer Kontrolleinheit (54)
- in Abhängigkeit von ersten Eingangsgrößen, die Materialeigenschaften des Ernteguts (20) wiedergeben, eine zu erzielende Trockensubstanzdichte **D_{Mdry}** ermittelt wird,
- durch Auswertung von zweiten Eingangsgrößen, die Betriebseigenschaften und/oder -spezifikationen eines zur Verdichtung verwendeten Silofahrzeugs (14) wiedergeben, ein maximal erzeugbarer Verdichtungsdruck **p_{d}** ermittelt wird,
- ausgehend von der ermittelten zu erzielenden Trockensubstanzdichte **D_{Mdry}** und dem ermittelten maximal erzeugbaren Verdichtungsdruck **p_{d}** eine maximal zulässige Schichtdicke **dₘₐₓ** für die Durchführung des Verteil- und Verdichtungsvorgangs ermittelt wird,
- eine während der Durchführung des Verteil- und Verdichtungsvorgangs aktuell aufgebrachte Schichtdicke **dₐₖₜ** ortsbezogen ermittelt wird,
- ein Vergleich zwischen der ermittelten maximal zulässigen Schichtdicke **dₘₐₓ** und der ortsbezogen ermittelten aktuell aufgebrachten Schichtdicke **dₐₖₜ** durchgeführt wird, um eine ortsbezogen optimierte Ziel-Schichtdicke **dₛₒₗₗ** des Ernteguts (20) für die Durchführung des Verteil- und Verdichtungsvorgangs zu ermitteln, und
- eine Stelleinrichtung (42) eines an dem Silofahrzeug (14) vorgesehenen Verteilwerkzeugs (38) im Sinne einer Angleichung der ortbezogen ermittelten aktuell aufgebrachten Schichtdicke **dₐₖₜ** an die ermittelte ortsbezogen optimierte Schichtdicke **dₛₒₗₗ** angesteuert wird.

2. Verfahren nach Anspruch 1, **dadurch gekennzeichnet, dass** das Verteilwerkzeug (38) als frontseitig am Silofahrzeug (14) angeordnetes Verteilschild (40) ausgebildet ist, wobei das Verteilschild (40) mittels der Stelleinrichtung (42) hinsichtlich eines Abstands d und/oder einer Vertikallage **α** gegenüber einer durch eine äußere Erntegutschicht gebildeten Silooberfläche (44) verändert wird.

3. Verfahren nach Anspruch 1 oder 2, **dadurch gekennzeichnet, dass** zur Optimierung der ortsbezogen ermittelten Ziel-Schichtdicke **dₛₒₗₗ** von der Kontrolleinheit (54) eine als Nebenbedingung bei der Durchführung des Verteil- und Verdichtungsvorgangs einzuhaltende Arbeitseffizienzvorgabe einbezogen wird.

4. Verfahren nach Anspruch 3, **dadurch gekennzeichnet, dass** die einzuhaltende Arbeitseffizienzvorgabe über eine mit der Kontrolleinheit (54) in Verbindung stehende Nutzerschnittstelle (78) entsprechend festgelegter Kategorien auswählbar ist.

5. Verfahren nach wenigstens einem der vorhergehenden Ansprüche, **dadurch gekennzeichnet, dass** zur Optimierung der ortsbezogen ermittelten Ziel-Schichtdicke **dₛₒₗₗ** von der Kontrolleinheit (54) Daten hinsichtlich einer vor Durchführung des Verteil- und Verdichtungsvorgangs erfassten Silokontur (90, 94) und einer beim Auftragen der nächsten Erntegutschicht zu erreichenden Silokontur (98) einbezogen werden.

6. Verfahren nach wenigstens einem der vorhergehenden Ansprüche, **dadurch gekennzeichnet, dass** bei der Ansteuerung des Verteilwerkzeugs (38) Informationen hinsichtlich einer zu verteilenden Gesamtmenge von in das Flachsilo (12) entladenen Ernteguts (20) und/oder einer zu verteilenden Restmenge an Erntegut (20) einbezogen werden.

7. Verfahren nach Anspruch 6, **dadurch gekennzeichnet, dass** die von einem Ladewagen in das Flachsilo (12) entladene Erntegutmenge seitens eines Farmmanagementsystems (88) erfasst und drahtlos an die Kontrolleinheit (54) übermittelt wird.

8. Verfahren nach wenigstens einem der vorhergehenden Ansprüche, **dadurch gekennzeichnet, dass** die ersten Eingangsgrößen einen Restfeuchtegehalt des Ernteguts (20), einen Pflanzentyp und/oder einen Verarbeitungsgrad betreffen.

9. Verfahren nach wenigstens einem der vorhergehenden Ansprüche, **dadurch gekennzeichnet, dass** die zweiten Eingangsgrößen ein Fahrzeuggewicht, eine durch Bodeneingriffsmittel (24) des Silofahrzeugs (14) gebildete Aufstandsfläche, einen Reifendruck, einen Reifentyp, und/oder Verdichtungseigenschaften eines an dem Silofahrzeug (14) vorgesehenen Verdichtungswerkzeugs (68) betreffen.

10. Verfahren nach wenigstens einem der vorhergehenden Ansprüche, **dadurch gekennzeichnet, dass** die aktuell aufgebrachte Schichtdicke **dₐₖₜ** von der Kontrolleinheit (54) auf Grundlage eines Vergleichs zwischen einer vor Durchführung des Verteil- und Verdichtungsvorgangs erfassten ersten Silokontur (90) sowie einer sich bei Durchführung des Verteil- und Verdichtungsvorgangs ergebenden zweiten Silokontur (92) ermittelt wird.

11. Verfahren nach wenigstens einem der vorhergehenden Ansprüche, **dadurch gekennzeichnet, dass** die aktuell aufgebrachte Schichtdicke **dₐₖₜ** von der Kontrolleinheit (54) auf Grundlage eines Vergleichs zwischen einer vor Durchführung des Verteil- und Verdichtungsvorgangs erfassten Silokontur (98) sowie einer dieser gegenüber erfassten Positionierung des Verteilwerkzeugs (38) ermittelt wird.

12. Verfahren nach wenigstens einem der vorhergehenden Ansprüche, **dadurch gekennzeichnet, dass** die ortsbezogen ermittelte aktuell aufgebrachte Schichtdicke **dₐₖₜ**, die ermittelte maximal zulässige Schichtdicke **dₘₐₓ**, und/oder die ermittelte ortsbezogen optimierte Schichtdicke **dₛₒₗₗ** über eine mit der Kontrolleinheit (54) in Verbindung stehende Anzeigeeinheit (82) visualisiert wird.

## Claims

1. Method for controlling the distribution and compaction of crops in a flat silo, in which a controller (54)
- determines in dependence on first input variables, which reproduce material properties of the crop (20), a dry substance density **D_{Mdry}** to be achieved,
- determines a compacting pressure **p_{d}** that can be generated as a maximum by evaluating second input variables, which reproduce operating properties and/or specifications of a silo vehicle (14) used for the compaction,
- determines on the basis of the determined dry substance density **D_{Mdry}** to be achieved and the determined maximum compacting pressure **p_{d}** that can be generated a maximum permissible layer thickness **dₘₐₓ** for carrying out the distributing and compacting operation,
- determines in a location-specific manner a layer thickness **dₐₖₜ** applied at the time while carrying out the distributing and compacting operation,
- carries out a comparison between the determined maximum permissible layer thickness **dₘₐₓ** and the layer thickness **dₐₖₜ** applied at the time, determined in a location-specific manner, in order to determine a target layer thickness **dₛₒₗₗ** of the crop (20) that is optimized in a location-specific manner for carrying out the distributing and compacting operation, and
- activates an adjusting device (42) of a distributing tool (38), provided on the silo vehicle (14), for the purpose of making the layer thickness **dₐₖₜ** applied at the time, determined in a location-specific manner, match the optimized layer thickness **dₛₒₗₗ**, determined in a location-specific manner.

2. Method according to Claim 1, **characterized in that** the distributing tool (38) is formed as a distributing plate (40) arranged on the front of the silo vehicle (14), wherein the distributing plate (40) is varied by means of the adjusting device (42) with regard to a distance **d** and/or a vertical position **α** with respect to a silo surface (44) formed by an outer layer of the crop.

3. Method according to Claim 1 or 2, **characterized in that**, for optimizing the target layer thickness **dₛₒₗₗ**, determined in a location-specific manner, a working efficiency default value to be maintained is included by the controller (54) as a constraint when carrying out the distributing and compacting operation.

4. Method according to Claim 3, **characterized in that** a working efficiency default value to be maintained can be selected in a manner corresponding to fixed categories by way of a user interface (78) in connection with the controller (54).

5. Method according to at least one of the preceding claims, **characterized in that**, for optimizing the target layer thickness **dₛₒₗₗ**, determined in a location-specific manner, data with regard to a silo contour (90, 94) sensed before carrying out the distributing and compacting operation and a silo contour (98) to be achieved when applying the next layer of the crop, are included by the controller (54) .

6. Method according to at least one of the preceding claims, **characterized in that** information regarding a total amount to be distributed of crop (20) unloaded into the flat silo (12) and/or a residual amount of crop (20) to be distributed is included in the activation of the distributing tool (38).

7. Method according to Claim 6, **characterized in that** an amount of crop unloaded from a loading wagon into the flat silo (12) is sensed by a farm management system (88) and transmitted wirelessly to the controller (54).

8. Method according to at least one of the preceding claims, **characterized in that** the first input variables concern a residual moisture content of the crop (20), a type of plant and/or a degree of processing.

9. Method according to at least one of the preceding claims, **characterized in that** the second input variables concern a vehicle weight, a contact area formed by ground engaging means (24) of the silo vehicle (14), a tyre pressure, a type of tyre, and/or compacting properties of a compacting tool (68) provided on the silo vehicle (14).

10. Method according to at least one of the preceding claims, **characterized in that** the layer thickness **dₐₖₜ** applied at the time is determined by the controller (54) on the basis of a comparison between the first silo contour (90), sensed before carrying out the distributing and compacting operation, and a second silo contour (92), obtained when carrying out the distributing and compacting operation.

11. Method according to at least one of the preceding claims, **characterized in that** the layer thickness **dₐₖₜ** applied at the time is determined by the controller (54) on the basis of a comparison between a silo contour (98), sensed before carrying out the distributing and compacting operation, and a positioning of the distributing tool (38), sensed with respect to the silo contour.

12. Method according to at least one of the preceding claims, **characterized in that** the layer thickness **dₐₖₜ** applied at the time, the determined maximum permissible layer thickness **dₘₐₓ**, and/or the optimized layer thickness **dₛₒₗₗ**, determined in a location-specific manner, are visualized by way of a display unit (82) in connection with the controller (54).

## Revendications

1. Procédé de commande de la distribution et du compactage de récolte dans un silo plat, procédé dans lequel une unité de contrôle (54)
- détermine une densité de matière sèche D_{Mdry} à atteindre en fonction de premières grandeurs d'entrée qui reflètent les propriétés matérielles de la récolte (20),
- détermine une pression de compactage maximale p_{d} qui peut être générée par évaluation de deuxièmes grandeurs d'entrée qui reflètent les propriétés et/ou spécifications de fonctionnement d'un véhicule-silo (14) utilisé pour le compactage,
- détermine une épaisseur de couche maximale admissible dₘₐₓ pour la réalisation du processus de distribution et de compactage à partir de la densité de matière sèche déterminée D_{Mdry} à atteindre et de la pression de compactage maximale déterminée p_{d} qui peut être générée,
- détermine localement une épaisseur de couche dₐₖₜ actuellement appliquée pendant la réalisation du processus de distribution et de compactage,
- effectue une comparaison entre l'épaisseur de couche maximale admissible déterminée dₘₐₓ et l'épaisseur de couche actuellement appliquée déterminée localement dₐₖₜ afin de déterminer une épaisseur de couche cible localement optimisée dₛₒₗₗ de la récolte récoltée (20) pour réaliser le processus de distribution et de compactage, et
- commander un dispositif de réglage (42) d'un outil de distribution (38) prévu au niveau du véhicule-silo (14) au sens d'une adaptation de l'épaisseur de couche actuellement appliquée déterminée localement dₐₖₜ à l'épaisseur de couche optimisée localement déterminée dₛₒₗₗ.

2. Procédé selon la revendication 1, **caractérisé en ce que** l'outil de distribution (38) est réalisé sous la forme d'une plaque de distribution (40) disposée à l'avant du véhicule-silo (14) ;
la plaque de distribution (40) étant modifiée au moyen du dispositif de réglage (42) en termes de distance d et/ou de position verticale α par rapport à une surface de silo (44) formée par une couche de récolte extérieure.

3. Procédé selon la revendication 1 ou 2, **caractérisé en ce que**, pour optimiser l'épaisseur de couche cible déterminée localement dₛₒₗₗ, l'unité de contrôle (54) prend en compte une spécification d'efficacité de travail à observer comme condition secondaire lors de la réalisation du processus de distribution et de compactage.

4. Procédé selon la revendication 3, **caractérisé en ce que** la spécification d'efficacité de travail à satisfaire peut être sélectionnée par le biais d'une interface utilisateur (78) reliée à l'unité de contrôle (54) conformément à des catégories définies.

5. Procédé selon l'une au moins des revendications précédentes, **caractérisé en ce que**, pour optimiser l'épaisseur de couche cible déterminée localement dₛₒₗₗ, l'unité de commande (54) prend en compte des données qui concernent un contour de silo (90, 94) acquis avant la réalisation du processus de distribution et de compactage et d'un contour de silo (98) à atteindre lors de l'application de la couche de récolte suivante.

6. Procédé selon l'une au moins des revendications précédentes, **caractérisé en ce que**, lorsque l'outil de distribution (38) est commandé, des informations sont prises en compte qui concernent une quantité totale à distribuer de récolte (20) déchargée dans le silo plat (12) et/ ou une quantité résiduelle de récolte (20) à distribuer.

7. Procédé selon la revendication 6, **caractérisé en ce que** la quantité de récolte déchargée d'un chariot de chargement dans le silo plat (12) est acquise par un système de gestion agricole (88) et transmise sans fil à l'unité de contrôle (54).

8. Procédé selon l'une au moins des revendications précédentes, **caractérisé en ce que** les premières grandeurs d'entrée concernent une teneur en humidité résiduelle de la récolte (20), un type de plante et/ou un degré de traitement.

9. Procédé selon l'une au moins des revendications précédentes, **caractérisé en ce que** les deuxièmes grandeurs d'entrée concernent un poids de véhicule, une surface de contact formée par des moyens d'appui au sol (24) du véhicule-silo (14), une pression de pneumatiques, un type de pneumatique et/ou des propriétés de compactage d'un outil de compactage (68) prévu au niveau du véhicule-silo (14).

10. Procédé selon l'une au moins des revendications précédentes, **caractérisé en ce que** l'épaisseur de couche actuellement appliquée dₐₖₜ est déterminée par l'unité de contrôle (54) sur la base d'une comparaison entre un premier contour de silo (90) acquis avant le processus de distribution et de compactage et un deuxième contour de silo (92) obtenu lors du processus de distribution et de compression.

11. Procédé selon l'une au moins des revendications précédentes, **caractérisé en ce que** l'épaisseur de couche actuellement appliquée dₐₖₜ est déterminée par l'unité de contrôle (54) sur la base d'une comparaison entre un contour de silo (98) acquis avant le processus de distribution et de compactage et un positionnement acquis de l'outil de distribution (38) par rapport au contour de silo.

12. Procédé selon l'une au moins des revendications précédentes, **caractérisé en ce que** l'épaisseur de couche actuellement appliquée déterminée localement dₐₖₜ, l'épaisseur de couche maximale admissible déterminée dₘₐₓ et/ou l'épaisseur de couche optimisée localement déterminée dₛₒₗₗ sont visualisées par le biais d'une unité d'affichage (82) reliée à l'unité de contrôle (54).
